# EUROPEAN PATENT APPLICATION

(11) **EP 4 603 287 A1**
(43) Date of publication of application: **20.08.2025**
(21) Application number: 25157893.6
(22) Date of filing: 14.02.2025
(51) Int. Cl.: B41J 3/32, B41J 2/205, B41J 11/00

(54) **INFORMATION PROCESSING APPARATUS, STORAGE MEDIUM, AND TEST CHART**

(30) Priority: 16.02.2024 JP 2024021805
(71) Applicant: Seiko Epson Corporation, Tokyo 160-8801 (JP)
(72) Inventor: HAYASHI, Ryotaro, Suwa-shi, 392-8502 (JP)
(74) Representative: Lewis Silkin LLP

(57) **Abstract**

An information processing apparatus includes a generator configured to generate test chart image data for causing a printing apparatus ejecting ink to print a test chart image including a plurality of braille patches, the plurality of braille patches including a first braille patch and a second braille patch, and a transmitter configured to transmit the test chart image data to the printing apparatus. The generator is configured to cause a first parameter related to a first dot included in the first braille patch to differ from a second parameter related to a second dot included in the second braille patch.

## Description

The present application is based on, and claims priority from JP Application Serial Number 2024-021805, filed February 16, 2024, the disclosure of which is hereby incorporated by reference herein in its entirety.

### BACKGROUND

### 1. Technical Field

The present disclosure relates to an information processing apparatus, a storage medium, and a test chart.

### 2. Related Art

Ink jet printers for printing braille characters are known. The printer described in JP-A-2004-249684 performs recording operations in a braille forming mode. In the braille forming mode, the printer ejects ink onto the surface of the recording paper, thereby forming small protrusions. The printer forms braille characters on the recording paper by forming small protrusions on the surface of the recording paper. The printer prints braille characters based on braille formation data transmitted from the host computer.

When braille characters are printed by the ink jet printer, a printing result varies depending on, for example, the type of recording paper. Therefore, braille characters may not be printed in a manner that is not desired by the user.

### SUMMARY

According to an aspect of the present disclosure, an information processing apparatus includes a generator configured to generate test chart image data for causing a printing apparatus ejecting ink to print a test chart image including a plurality of braille patches, the plurality of braille patches including a first braille patch and a second braille patch; and a transmitter configured to transmit the test chart image data to the printing apparatus. The generator is configured to cause a first parameter related to a first dot included in the first braille patch to differ from a second parameter related to a second dot included in the second braille patch.

According to another aspect of the present disclosure, a non-transitory computer-readable storage medium storing an information processing program that, when executed, causes a computer to execute a generator configured to generate test chart image data for causing a printing apparatus to print a test chart image including a plurality of braille patches including a first braille patch and a second braille patch, and a transmitter configured to transmit the test chart image data to the printing apparatus. The generator is configured to cause a first parameter related to a first dot included in the first braille patch to differ from a second parameter related to a second dot included in the second braille patch.

According to another aspect of the present disclosure, a test chart includes a first braille patch and a second braille patch. A first shape of a first dot included in the first braille patch differs from a second shape of a second dot included in the second braille patch.

### BRIEF DESCRIPTION OF THE DRAWINGS

FIG. 1 is a diagram showing a schematic configuration of a printing system.
FIG. 2 is a diagram showing a schematic configuration of a printer.
FIG. 3 is a diagram showing a sectional structure of a printing unit.
FIG. 4 is a diagram showing a structure of a braille character.
FIG. 5 schematically shows the shape of a dot.
FIG. 6 schematically shows a structure of the dot.
FIG. 7 is a diagram showing a schematic configuration of a printing system.
FIG. 8 shows an exemplary braille pattern setting screen.
FIG. 9 shows an exemplary braille test chart.
FIG. 10 shows an exemplary braille test chart.
FIG. 11 shows an exemplary braille test chart.
FIG. 12 shows an exemplary braille test chart.
FIG. 13 shows an exemplary braille pattern setting screen.

### DESCRIPTION OF EMBODIMENTS

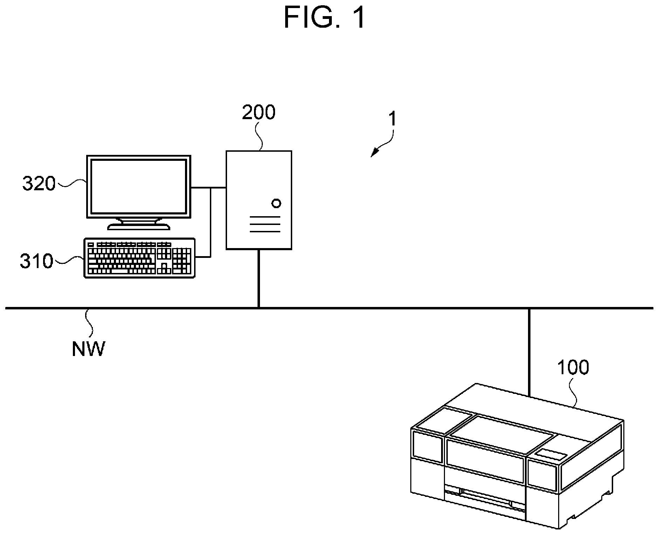

FIG. 1 shows a schematic configuration of a printing system 1. The printing system 1 generates a printed material based on print data. The printing system 1 includes a printer 100, a printing control apparatus 200, an input device 310, and a display 320. The printer 100 and the printing control apparatus 200 are communicatively connected to each other via a communication network NW.

The printer 100 performs printing on print media M by ejecting ink onto the print media M. The printer 100 is an inkjet printer. The printer 100 is capable of printing a braille character 400 on the print media M. The printer 100 corresponds to an example of a printing apparatus.

The printing control apparatus 200 controls printing performed by the printer 100. The printing control apparatus 200 generates print data. The printing control apparatus 200 transmits the print data to the printer 100. The printing control apparatus 200 causes the printer 100 to perform printing based on the print data. The printing control apparatus 200 corresponds to an example of an information processing apparatus.

The printing control apparatus 200 is coupled to the input device 310 and the display 320. The printing control apparatus 200 receives data input by a user from the input device 310. The printing control apparatus 200 generates display data and transmits the display data to the display 320. The printing control apparatus 200 causes the display 320 to display various setting screens and other items based on the display data.

The printing control apparatus 200 is a computer. The printing control apparatus 200 shown in FIG. 1 is, but not limited to, a desk-top computer. The printing control apparatus 200 may be a notebook computer or a tablet computer. When the printing control apparatus 200 is a notebook computer or a tablet computer, the printing control apparatus 200, the input device 310, and the display 320 are integrally constructed.

The input device 310 receives an operation input by a user. The input device 310 is coupled to the printing control apparatus 200 via a Universal Serial Bus (USB) cable, for example. The input device 310 outputs input data, based on an operation input by a user, to the printing control apparatus 200. The input device 310 includes a keyboard, a mouse, and other peripherals.

The display 320 displays various images based on display data transmitted from the printing control apparatus 200. The display 320 is coupled to the printing control apparatus 200 via, for example, a High-Definition Multimedia Interface (HDMI) cable. HDMI is a registered trademark. The display 320 is constituted by a liquid crystal panel, an organic electro luminescence (EL) panel, or other panel. The display 320 may have a touch input function. When the display 320 has the touch input function, the display 320 functions as the input device 310.

The communication network NW communicatively connects the printer 100 and the printing control apparatus 200. The communication network NW may be a local area network (LAN) constructed in an office or a floor, or may be a wide area network (WAN). As shown in FIG. 1, the printer 100 and the printing control apparatus 200 are communicatively connected to each other via, not limited to, the communication network NW. The printer 100 and the printing control apparatus 200 may be coupled to each other with a USB cable, for example.

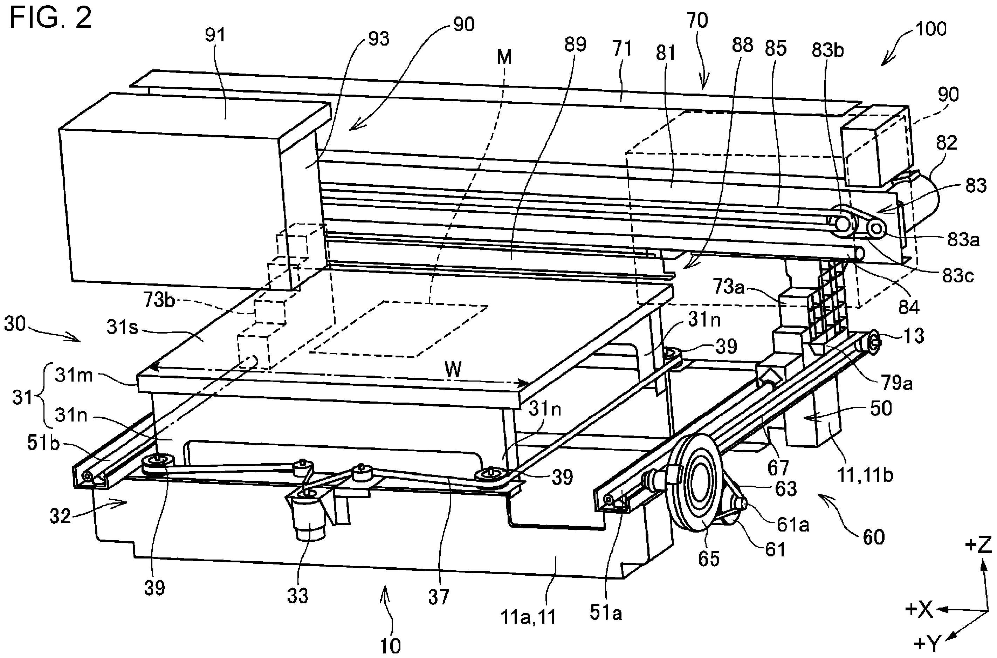

FIG. 2 shows a schematic configuration of the printer 100. FIG. 2 shows the configuration of the printer 100 the outer housing of which is removed. FIG. 2 is a perspective view showing the internal configuration of the printer 100.

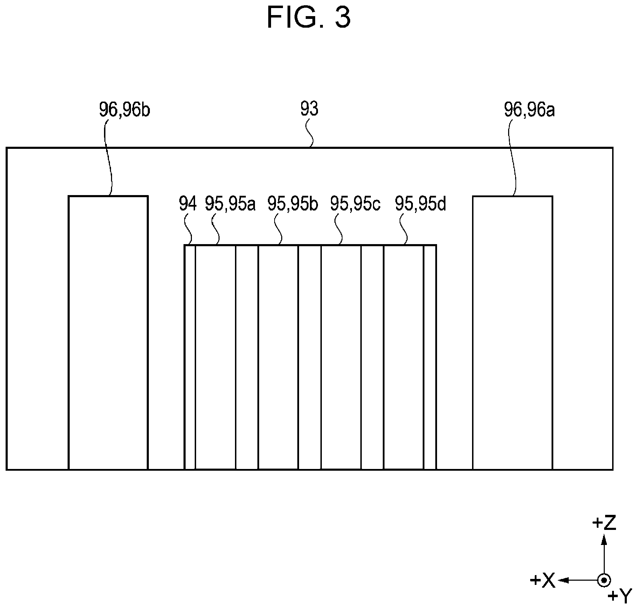

FIGS. 2 and 3 are shown using the XYZ coordinate system. The X-axis, Y-axis, and Z-axis are perpendicular to each other. The Z-axis is an axis perpendicular to an installation surface (not shown) of the printer 100. The X-axis and the Y-axis are parallel to the installation surface. The X-axis is an axis along a carriage guide shaft 84 shown in FIG. 2. The Y-axis is an axis perpendicular to the carriage guide shaft 84. A +Z direction is a direction upward from the installation surface along the Z-axis. A -Z direction is a direction downward from the installation surface along the Z-axis. A +X direction is a direction from the right to the left of the carriage guide shaft 84 shown in FIG. 2. A -X direction is a direction from the left to the right of the carriage guide shaft 84 shown in FIG. 2. A +Y direction is a direction from the rear to the front of the printer 100 shown in FIG. 2. A -Y direction is a direction from the front to the rear of the printer 100 shown in FIG. 2.

The printer 100 includes a main body section 10 and a moving section 70. The main body section 10 is a pedestal fixed to the installation surface of the printer 100. The moving section 70 moves along the Y-axis with respect to the main body section 10.

The main body section 10 movably supports the print media M. The main body section 10 moves the print media M along the Z-axis. The main body section 10 includes a base portion 11, a media support mechanism 30, and a drive mechanism 50.

The base portion 11 is mounted on the installation surface of the printer 100. The base portion 11 supports components of the printer 100, such as the media support mechanism 30 and the drive mechanism 50. The base portion 11 shown in FIG. 2 includes a first base member 11a, a second base member 11b, and a main body pulley 13. The first base member 11a and the second base member 11b are arranged along the Y-axis.

The media support mechanism 30 supports the print media M. The media support mechanism 30 adjusts the print media height of the supported print media M along the Z-axis. The media support mechanism 30 includes a table 31 and a height movement mechanism 32.

The table 31 is configured to allow for mounting of the print media M. The print media M is mounted on the table 31. The table 31 is a base that does not move along the X-axis and the Y-axis. The table 31 includes a media support portion 31m and a table leg portion 31n.

The media support portion 31m is a member on which the print media M is mounted. The media support portion 31m is a rectangular flat plate. The print media M is mounted on a media support surface 31s of the media support portion 31m. The media support surface 31s is a surface in the +Z direction of the media support portion 31m. A support surface length W of the media support surface 31s along the X-axis is equal to or substantially equal to the length of the print media M with the maximum size along the X-axis. The length of the media support surface 31s along the Y-axis may be longer or shorter than the length of the print media M with the maximum size along the Y-axis.

The table leg portion 31n supports the media support portion 31m. The table 31 shown in FIG. 2 includes a plurality of table leg portions 31n. The plurality of table leg portions 31n are disposed at ends of the media support portion 31m. The number and positions of the table leg portions 31n may be appropriately set.

The height movement mechanism 32 moves the media support portion 31m along the Z-axis. The height movement mechanism 32 adjusts the height of the print media M mounted on the media support portion 31m. The height movement mechanism 32 includes a lifting motor 33, a lifting belt 37, and a plurality of lifting mechanisms 39.

The lifting motor 33 produces a driving force for moving the table 31 along the Z-axis. The lifting motor 33 includes an output shaft (not shown). The output shaft of the lifting motor 33 rotates in a direction for moving the table 31 in the +Z direction or in a direction for moving the table 31 in the -Z direction. The printer 100 causes the lifting motor 33 to operate, thereby moving the table 31 in the +Z direction or in the -Z direction.

The lifting belt 37 is a circular belt extending between the output shaft of the lifting motor 33 and the plurality of lifting mechanisms 39. The lifting belt 37 is circularly driven by rotation of the output shaft of the lifting motor 33. The lifting belt 37 transmits the rotation of the output shaft of the lifting motor 33 to the plurality of lifting mechanisms 39.

The lifting mechanism 39 moves the table 31 along the Z-axis. Each of the plurality of table leg portions 31n is provided with the lifting mechanism 39. The lifting mechanism 39 includes, by way of example, a ball screw, a nut, and a lifting pulley. The ball screw, the nut, and the lifting pulley are not shown in the drawings. The ball screw is disposed along the Z-axis. The ball screw is rotatably supported by the base portion 11. The nut is screwed onto the ball screw. The nut is fixed to the table leg portion 31n. The lifting pulley is fixed to an upper portion of the ball screw. The lifting pulley is engaged with the lifting belt 37. The lifting pulley receives the rotation of the output shaft of the lifting motor 33 via the lifting belt 37. In response to rotation of the lifting pulley, the ball screw rotates. Rotation of the ball screw causes the nut and the table leg portion 31n to move along the Z-axis.

The drive mechanism 50 moves the moving section 70 along the Y-axis. The drive mechanism 50 includes a first guide shaft 51a, a second guide shaft 51b, and a frame drive portion 60.

The first guide shaft 51a and the second guide shaft 51b guide the movement of the moving section 70 along the Y-axis. The first guide shaft 51a and the second guide shaft 51b extend between the first base member 11a and the second base member 11b. The first guide shaft 51a and the second guide shaft 51b are axial members disposed along the Y-axis. The first guide shaft 51a is fixed to an end position of the base portion 11 in the -X direction. The second guide shaft 51b is fixed to an end position of the base portion 11 in the +X direction.

The frame drive portion 60 includes a frame movement motor 61, a drive belt 63, a speed change mechanism 65, and a transmission belt 67. The frame drive portion 60 shown in FIG. 2 is disposed at a position in the -X direction of the base portion 11, but may be disposed at a position in the +X direction. The frame drive portion 60 is desirably disposed at a position in the -X direction.

The frame movement motor 61 produces a driving force for moving the moving section 70 along the Y-axis. The frame movement motor 61 includes a rotation shaft 61a. The rotation shaft 61a of the frame movement motor 61 rotates in a direction for moving the moving section 70 in the +Y direction and in a direction for moving the moving section 70 in the -Y direction. The printer 100 causes the frame movement motor 61 to operate, thereby moving the moving section 70 in the +Y direction or in the -Y direction.

The drive belt 63 transmits the driving force produced by the frame movement motor 61 to the speed change mechanism 65. The drive belt 63 is a circular belt extending between the rotation shaft 61a of the frame movement motor 61 and the speed change mechanism 65.

The speed change mechanism 65 changes the speed of rotation caused by the rotation shaft 61a. The speed change mechanism 65 includes, for example, a first pulley and a second pulley. The details of the first pulley and the second pulley are not shown in the drawings. The drive belt 63 is wound around the first pulley. The transmission belt 67 is wound around the second pulley. The speed change mechanism 65 rotates the second pulley by means of the driving force transmitted from the drive belt 63 to the first pulley. The second pulley drives the transmission belt 67. The speed change mechanism 65 transmits the driving force, produced by the frame movement motor 61, to the transmission belt 67 at a speed reduction ratio corresponding to the ratio of the diameter of the first pulley to the diameter of the second pulley.

The transmission belt 67 transmits the driving force to the moving section 70. The transmission belt 67 is a circular belt extending between the speed change mechanism 65 and the main body pulley 13. The main body pulley 13 is disposed on the second base member 11b. The main body pulley 13 is placed rotatably about the second base member 11b. The transmission belt 67 is disposed along the first guide shaft 51a.

The moving section 70 moves with respect to the print media M. The moving section 70 moves along the Y-axis with respect to the print media M. The moving section 70 includes a main frame 71 and a recording section 90.

The main frame 71 is a plate-shaped member disposed along the X-axis. The main frame 71 moves along the Y-axis. The length of the main frame 71 along the X-axis is longer than the length of the base portion 11 along the X-axis. The main frame 71 includes a first leg 73a, a second leg 73b, a carriage support frame 81, a carriage drive motor 82, a transmission mechanism 83, the carriage guide shaft 84, and a carriage drive belt 85.

The first leg 73a and the second leg 73b fixedly support the main frame 71. The first leg 73a and the second leg 73b support the main frame 71 at positions in the -Z direction of the main frame 71.

The first leg 73a is disposed at a position in the -X direction of the main frame 71. The first leg 73a is fitted to the first guide shaft 51a. The first leg 73a is movable along the first guide shaft 51a. The first leg 73a includes a first belt connect portion 79a. The first leg 73a is fixed to the transmission belt 67 via the first belt connect portion 79a. When the transmission belt 67 is circularly driven, a driving force is transmitted to the first leg 73a via the first belt connect portion 79a. The moving section 70 moves along the Y-axis by means of the driving force transmitted by the first leg 73a.

The second leg 73b is disposed at a position in the +X direction of the main frame 71. The second leg 73b is fitted to the second guide shaft 51b. The second leg 73b is guided by the second guide shaft 51b. The second leg 73b is movable in the +Y direction and -Y direction along the second guide shaft 51b.

The carriage support frame 81 supports a carriage 91 described later. The carriage support frame 81 is a plate-shaped member disposed along the X-axis. The carriage support frame 81 is supported by the main frame 71.

The carriage drive motor 82 produces a driving force for moving the carriage 91. The carriage drive motor 82 is supported by the carriage support frame 81. The carriage drive motor 82 shown in FIG. 2 is disposed at a position in the -X direction of the carriage support frame 81.

The transmission mechanism 83 transmits the driving force produced by the carriage drive motor 82 to the carriage drive belt 85. The transmission mechanism 83 includes a transmission pulley 83a, a two-step transmission pulley 83b, and a transmission belt 83c. The transmission pulley 83a is fixed to the drive shaft of the carriage drive motor 82. The transmission belt 83c is a circular belt extending between the transmission pulley 83a and the two-step transmission pulley 83b. The two-step transmission pulley 83b includes a small pulley and a large pulley having a diameter larger than that of the small pulley. The transmission belt 83c is wound around the large pulley. The carriage drive belt 85 is wound around the small pulley. The transmission belt 83c is circularly driven by rotation of the carriage drive motor 82. The transmission belt 83c rotates the large pulley. The transmission belt 83c rotates the small pulley by rotating the large pulley. The small pulley circularly drives the carriage drive belt 85. The rotation of the carriage drive motor 82 is transmitted to the carriage drive belt 85 at a speed reduction ratio corresponding to the ratio of the diameter of the large pulley to the diameter of the small pulley.

The carriage guide shaft 84 guides the carriage 91. The carriage guide shaft 84 is fixed to the carriage support frame 81. The carriage guide shaft 84 is disposed along the X-axis. The carriage guide shaft 84 guides the carriage 91 along the X-axis.

The carriage drive belt 85 moves the carriage 91. The carriage drive belt 85 is a circular belt extending between the transmission mechanism 83 and a carriage drive pulley (not shown). The transmission mechanism 83 is disposed at a position in the -X direction of the carriage support frame 81. The carriage drive pulley is disposed at a position in the +X direction of the carriage support frame 81. The carriage drive belt 85 is disposed along the carriage guide shaft 84.

The printer 100 may include a height detection portion 88. The height detection portion 88 detects the height of the print media M mounted on the table 31. The height detection portion 88 includes a contact plate 89 disposed to protrude downward from the lower end of the main frame 71. The contact plate 89 is a plate-like member. The contact plate 89 is attached to the main frame 71 so as to be rotatable about a virtual rotation axis parallel to the X-axis. The contact plate 89 rotates upon contacting the print media M or the media support portion 31m. An arm (not shown) is formed on the contact plate 89. The arm is displaced with the rotation of the contact plate 89. The displacement of the arm is detected by a displacement sensor (not shown). The displacement sensor is provided in the height detection portion 88. The displacement sensor is a magnetic sensor, a reflective optical sensor, or a transmissive optical sensor. When the displacement sensor detects the displacement of the arm, the height detection portion 88 detects the rotation of the contact plate 89. The height detection portion 88 detects the height of the print media M by detecting the rotation of the contact plate 89.

The recording section 90 performs printing on the print media M. The recording section 90 is supported by the moving section 70. The recording section 90 includes a carriage 91 and a printing unit 93.

The printing unit 93 is mounted on the carriage 91. The carriage 91 links to the carriage drive belt 85. In response to circulation driving of the carriage drive belt 85, the carriage 91 moves. The carriage 91 is supported by the carriage guide shaft 84. The carriage 91 is movable along the carriage guide shaft 84. The carriage 91 is movable in the +X direction or the -X direction along the X-axis. The carriage 91 moves between the end position in the -X direction and the end position in the +X direction along the X-axis. Due to the driving of the carriage drive motor 82, the carriage drive belt 85 moves the carriage 91 between the end position in the -X direction and the end position in the +X direction.

The end position in the -X direction is referred to as a home position. The home position is a position different from the position on the print media M. The home position is a position offset in the -X direction or +X direction from the print media M. In the case of the printer 100 shown in FIG. 2, the home position is a position offset in the -X direction from the print media M and the media support portion 31m that supports the print media M. The carriage 91 located at the home position may face a maintenance mechanism that performs maintenance such as flushing and cleaning of the printing unit 93. The maintenance mechanism is not shown in the drawings. The maintenance mechanism is disposed at a facing position facing the carriage 91 located at the home position or a position adjacent to the facing position. In FIG. 2, the recording section 90 located at the home position is indicated by a broken line.

The end position in the +X direction is a return position. The carriage 91 stops at the return position. The carriage 91 moves in the +X direction from the home position. The carriage 91 starts from the home position, passes over the print media M, and stops at the return position. The return position is a position in the +X direction relative to the home position. The carriage 91 stops at the return position and then moves in the -X direction. The carriage 91 starts from the return position, passes over the print media M, and moves to the home position.

The printing unit 93 performs printing on the print media M. With the carriage 91 moving in the X-axis, the printing unit 93 moves in the +X direction or in the -X direction. With the main frame 71 moving in the Y-axis, the printing unit 93 moves in the +Y direction or in the - Y direction. The printer 100 is capable of moving the printing unit 93 relative to the table 31 along the X-axis and the Y-axis. The printing unit 93 is capable of ejecting ink onto the entire print media M supported by the table 31.

FIG. 3 shows a cross-sectional structure of the printing unit 93. FIG. 3 shows an X-Z cross section. The printing unit 93 includes a print head unit 94 and an ultraviolet (UV) lamp 96. The printing unit 93 includes a first UV lamp 96a, the print head unit 94, and a second UV lamp 96b in order from a location in the -X direction along the X-axis.

The print head unit 94 includes one or more print heads 95. The print head unit 94 shown in FIG. 3 includes a first print head 95a, a second print head 95b, a third print head 95c, and a fourth print head 95d. The print head unit 94 shown in FIG. 3 includes, but not limited to, four print heads 95. The print head unit 94 includes one or more print heads 95. The print head unit 94 desirably includes a plurality of print heads 95.

The print head 95 ejects ink as a liquid onto the print media M. The print head 95 includes a plurality of nozzles (not shown) that eject ink. The nozzles open on the surface of the print head 95 in the -Z direction. When the print head 95 ejects ink from the nozzles, the ejected ink flies from the surface of the print head 95 in the -Z direction to the print media M mounted on the table 31. The ink lands on the print media M.

The ink ejected by the print head 95 is ultraviolet (UV) curing ink. The UV curing ink contains a resin material, a photopolymerization initiator, and a solution as the main materials.

The resin material is a material for forming a resin film. The resin material is in a liquid state at room temperature. The resin material has a crosslinkable group. The resin material is desirably a material that becomes a polymer by polymerization. The resin material is desirably in the form of an oligomer. More desirably, the resin material is in the form of a monomer.

The photopolymerization initiator functions as a curing agent. The photopolymerization initiator acts on a crosslinkable group of the resin material to promote a crosslinking reaction. The photopolymerization initiator is, for example, benzyl dimethyl ketal.

The solution is a solvent or a dispersion medium. The solution adjusts the viscosity of the resin material. By adding the solution to the UV curing ink, the UV curing ink is adjusted to a predetermined viscosity.

The UV curing ink may contain a coloring matter and a functional material. The UV curing ink that contains the coloring matter and the functional material has a unique function. The coloring matter is, for example, a pigment or a dye. Examples of the coloring matter included in the UV curing ink include cyan, magenta, yellow, and white pigments. The functional material is, by way of example, a lyophilic or liquid-repellent surface modification material.

Each of the plurality of print heads 95 ejects the UV curing ink onto the print media M. In the print head unit 94, it is desirable that the plurality of print heads 95 eject a plurality of types of UV curing ink onto the print media M. The plurality of inks differ from each other in at least one of a resin material, a photopolymerization initiator, and a solution. The plurality of inks may differ from each other in the coloring matter and functional material added.

The plurality of types of UV curing ink ejected in the print head unit 94 may include clear ink. The clear ink contains a photopolymerization initiator and a polymerizable compound. The clear ink is used for protection of a coating film formed with another ink, adjustment of glossiness of a printed material, and other purposes. The proportion of the content of the coloring matter contained in clear ink in the total amount of the clear ink is desirably less than or equal to 0.2% by mass. It is more desirable that the clear ink contain no coloring material.

By way of example, the first print head 95a, the second print head 95b, the third print head 95c, and the fourth print head 95d eject respectively different types of UV curing ink. The first print head 95a ejects cyan ink containing cyan pigment. The second print head 95b ejects magenta ink containing magenta pigment. The third print head 95c ejects clear ink. The fourth print head 95d ejects yellow ink containing yellow pigment.

The UV lamp 96 photo-cures the UV curing ink ejected onto the print media M. UV is an abbreviation for ultraviolet. The UV lamp 96 applies ultraviolet rays to the print media M. The UV lamp 96 cures the UV curing ink ejected onto the print media M by applying ultraviolet rays to the print media M.

The UV lamp 96 is constituted by, for example, a metal halide lamp, a xenon lamp, a carbon arc lamp, a chemical lamp, a low pressure mercury lamp, or a high pressure mercury lamp. The UV lamp 96 may be configured with, for example, a UV light emitting diode or UV light emitting semiconductor laser. The UV lamp 96 emits ultraviolet rays having wavelengths greater than or equal to 365 nm and less than or equal to 410 nm. The irradiation peak intensity of the UV lamp 96 is desirably greater than or equal to 200 mW/cm², and more desirably greater than or equal to 800 mW/cm².

The printing unit 93 shown in FIG. 3 includes the first UV lamp 96a and the second UV lamp 96b, which are the UV lamps 96. The printing unit 93 includes, but not limited to, the second UV lamp 96b. The printing unit 93 may not include the second UV lamp 96b. It is desirable that the printing unit 93 include the second UV lamp 96b.

The printing unit 93 is capable of printing the braille character 400. The print head unit 94 ejects the UV curing ink onto the print media M. The print head unit 94 ejects the UV curing ink onto the print media M, thereby forming a raised portion on the print media M. The formed raised portions function as the dots 403 of the braille character 400. The printer 100 is capable of printing the braille character 400.

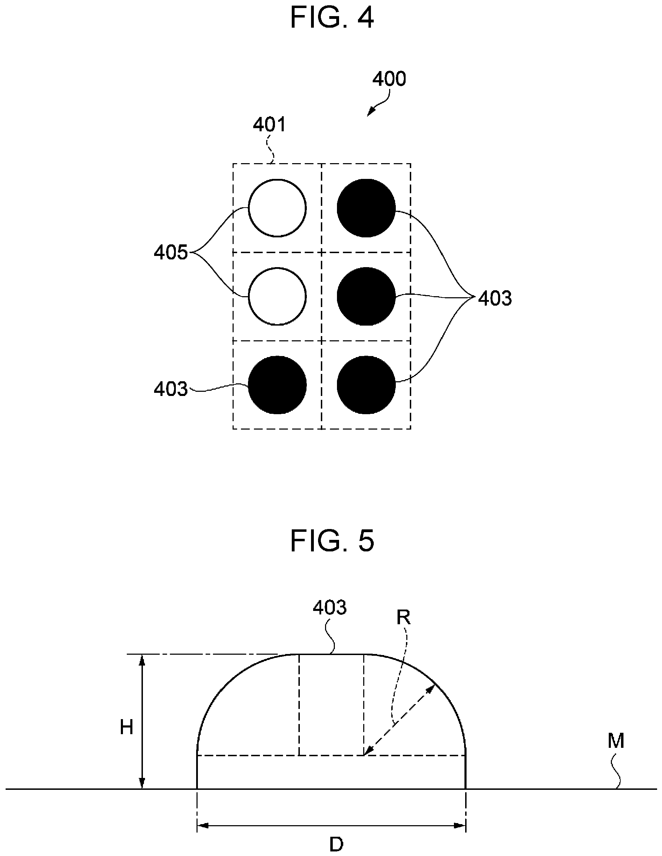

FIG. 4 shows the structure of the braille character 400. FIG. 4 schematically shows the structure of one braille character 400. The braille character 400 is represented by one or more dots 403 arranged in one braille cell 401. The number of locations for the dots 403 arranged in one braille cell 401 is six. The six locations are arranged in two columns and three rows.

The braille cell 401 is a predetermined virtual region. The size of the braille cell 401 is directly or indirectly determined by, for example, the standards of Japanese Industrial Standards (JIS). One braille character, such as one letter, is represented by the one or more dots 403 arranged in one braille cell 401.

The dot 403 is a raised portion that is printed by the printer 100. The dot 403 is configured in the three-dimensional shape. The shape of the dot 403 is determined within a range predetermined by, for example, the JIS standards. The shape of the dot 403 varies by country and varies by standards. The shape of the dot 403 includes the size of the dot 403.

A non-raised dot 405 virtually indicates a position at which the dot 403 may be placed to be printed. There is no raised portion in the non-raised dot 405. One braille character, such as one letter, is represented using the one or more dots 403 and one or more non-raised dots 405 arranged in one braille cell 401.

FIG. 5 schematically shows the shape of the dot 403. FIG. 5 schematically shows the structure of the dot 403 on the print media M. The dot 403 is a raised portion formed on the print media M. The shape of the dot 403 is represented by a diameter D, a height H, and a radius of curvature R.

The diameter D is the outer diameter of the dot 403. The dot 403 is printed in a circular or substantially circular shape when viewed in a plan view of the print media M. The diameter D may vary depending on the penetration state of ink into the print media M. The diameter D may be adjusted based on print data.

The height H is the dimension in a direction in which the dot 403 protrudes upward from the print media M. The height H may vary depending on the penetration state of ink into the print media M. The height H may be adjusted depending on the ejection amount of ink and the number of layers of ink.

The radius of curvature R indicates the shape of a shoulder portion of the dot 403 protruding upward. The radius of curvature R may be adjusted depending on the ejection amount of ink at each location in the dot 403. The radius of curvature R may be adjusted based on print data.

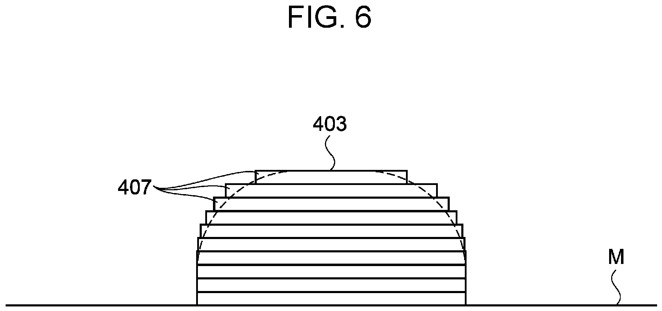

FIG. 6 schematically shows the structure of the dot 403. The dot 403 is formed by ejection of ink performed by the printer 100. The printer 100 prints the dot 403 by stacking ink layers 407 that are formed by ejection of ink.

FIG. 6 schematically shows the ink layers 407 constituting the dot 403. The printer 100 stacks the plurality of ink layers 407 to form the dot 403 having the predetermined height H. The height H of the dot 403 corresponds to the number of layers of the ink layers 407. Additionally, the printer 100 adjusts the widths of the ink layers 407 along the surface of the print media M to form the dot 403 having the predetermined radius of curvature R.

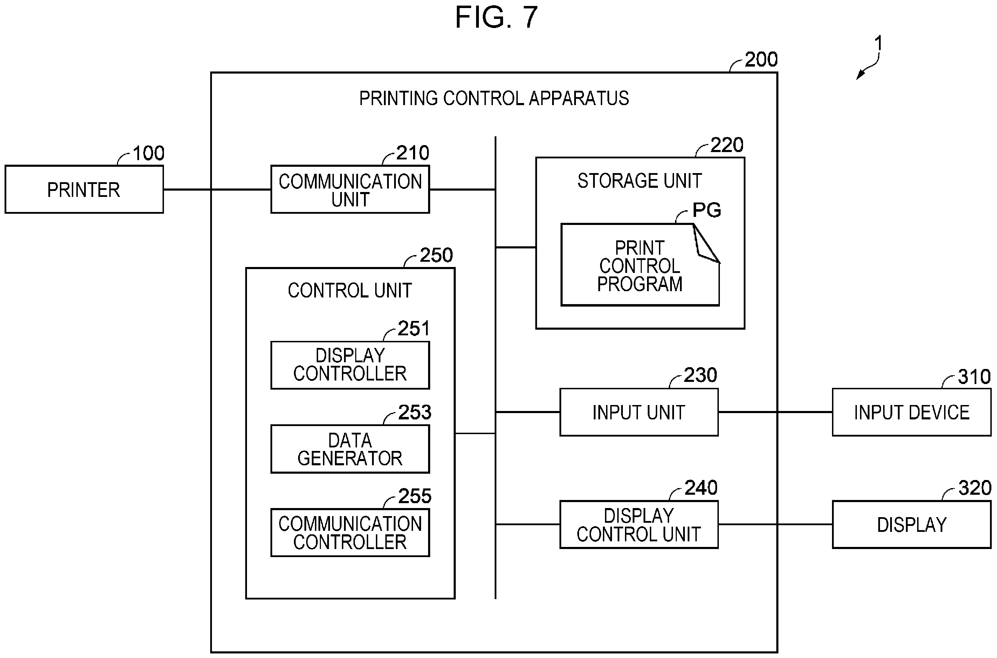

FIG. 7 shows a block configuration of the printing system 1. In FIG. 7, the block configuration of the printing control apparatus 200 included in the printing system 1 is shown. The printing control apparatus 200 includes a communication unit 210, a storage unit 220, an input unit 230, a display control unit 240, and a control unit 250.

The communication unit 210 is an interface circuit communicatively connected to the printer 100 and other devices. The communication unit 210 is connected to the printer 100 and other devices in a wired or wireless manner according to predetermined communication protocols. The communication unit 210 includes at least one of a wired connector and a wireless communication port. The wired connector is a USB connector, a LAN connector, or another connector. The wireless communication port is a Wi-Fi communication port, a Bluetooth communication port, or another port. Wi-Fi and Bluetooth are registered trademarks. The communication unit 210 is communicatively connected to the printer 100 via the communication network NW. The communication unit 210 transmits print data to the printer 100 via the communication network NW. The communication unit 210 receives various types of data such as status data from the printer 100 via the communication network NW.

The storage unit 220 stores various types of data, programs, and other resources. The storage unit 220 is constituted by a volatile semiconductor memory such as a random access memory (RAM), a nonvolatile memory such as a read only memory (ROM) or a flash memory, among others. The storage unit 220 may include a magnetic storage medium such as a hard disk drive (HDD). The storage unit 220 stores a print control program PG.

The print control program PG is software for controlling the printer 100. The print control program PG causes the control unit 250 to execute various functional sections. The print control program PG corresponds to an example of an information processing program.

The input unit 230 is an interface circuit that receives data input by a user. The input unit 230 is connected in a wired or wireless manner to the input device 310. The input unit 230 includes a USB port, a Bluetooth communication port, and other ports. The input unit 230 uses the input device 310 to receive data input by a user. The input data includes various setting values. The input unit 230 transmits the received input data to the control unit 250. The input unit 230 corresponds to an example of a receiving section.

The display control unit 240 is a display control circuit that transmits display data for displaying, for example, a setting screen on the display 320. The display control unit 240 is connected to the display 320 in a wired or wireless manner. The display control unit 240 includes an HDMI connection port, for example. The display control unit 240 is coupled to the display 320 via, for example, a High-Definition Multimedia Interface (HDMI) cable. The display control unit 240 transmits display data to the display 320 via, for example, the HDMI cable. The display control unit 240 causes the display 320 to display various setting screens and other items by transmitting display data to the display 320. When the display 320 has a touch input function, the display control unit 240 may function as the input unit 230.

The control unit 250 is a controller that controls components of the printing control apparatus 200. The control unit 250 is, by way of example, a processor including a central processing unit (CPU). The control unit 250 includes one or more processors. The control unit 250 functions as various functional sections by causing various programs to operate. The control unit 250 functions as a display controller 251, a data generator 253, and a communication controller 255 by causing the print control program PG to operate. The printing control apparatus 200 including the control unit 250 functions as the display controller 251, the data generator 253, and the communication controller 255. The control unit 250 may operate as functional sections other than the display controller 251, the data generator 253, and the communication controller 255.

The display controller 251 controls the display of the display 320 via the display control unit 240. The display controller 251 generates various types of display data. The display controller 251 generates setting screen display data for causing the display 320 to display various setting screens. The setting screen display data includes braille pattern setting screen data for causing the display 320 to display a braille pattern setting screen 500. The braille pattern setting screen 500 displays various setting values. The braille pattern setting screen 500 will be described later. The display controller 251 transmits the braille pattern setting screen data to the display 320 via the display control unit 240. The display controller 251 causes the display 320 to display the braille pattern setting screen 500 based on the braille pattern setting screen data. The display 320 displays the braille pattern setting screen 500 based on the braille pattern setting screen data.

The display controller 251 receives input data from the input unit 230. The input data includes a setting value change command, a setting value determination command, and other data. The display controller 251 changes a setting value included in the braille pattern setting screen 500 based on the setting value change command. The display controller 251 generates correction data for displaying the braille pattern setting screen 500 including the changed setting value. The display controller 251 transmits the corrected data to the display 320 via the display control unit 240. The display controller 251 causes the display 320 to display the braille pattern setting screen 500 including the changed setting value.

Upon receiving the setting value determination command, the display controller 251 transmits setting data to the data generator 253. The setting data includes various setting values included in the braille pattern setting screen 500 displayed on the display 320. Upon receiving the setting value determination command, the display controller 251 changes the braille pattern setting screen 500 displayed on the display 320 to another screen.

The data generator 253 generates print data to be printed by the printer 100. The print data includes braille test chart print data. The braille test chart print data causes the printer 100 to print a braille test chart 410. The braille test chart 410 corresponds to an example of a test chart image. The braille test chart 410 includes a plurality of braille patch images 411. The braille patch image 411 is the braille character 400 included in the braille test chart 410. The braille patch image 411 corresponds to an example of a braille patch. The braille test chart 410 will be described later. The braille test chart print data is generated based on the setting data. The braille test chart print data corresponds to an example of test chart image data. The data generator 253 corresponds to an example of a generator.

The communication controller 255 controls communication performed by the communication unit 210. The communication controller 255 transmits print data to the printer 100 via the communication unit 210. The communication controller 255 transmits braille test chart print data to the printer 100 via the communication unit 210. The communication controller 255 corresponds to an example of a transmitter.

The printer 100 receives print data transmitted via the communication unit 210. The printer 100 performs printing based on the print data to generate a printed material. The printer 100 receives braille test chart print data. Based on the braille test chart print data, the printer 100 prints the braille test chart 410 on the print media M.

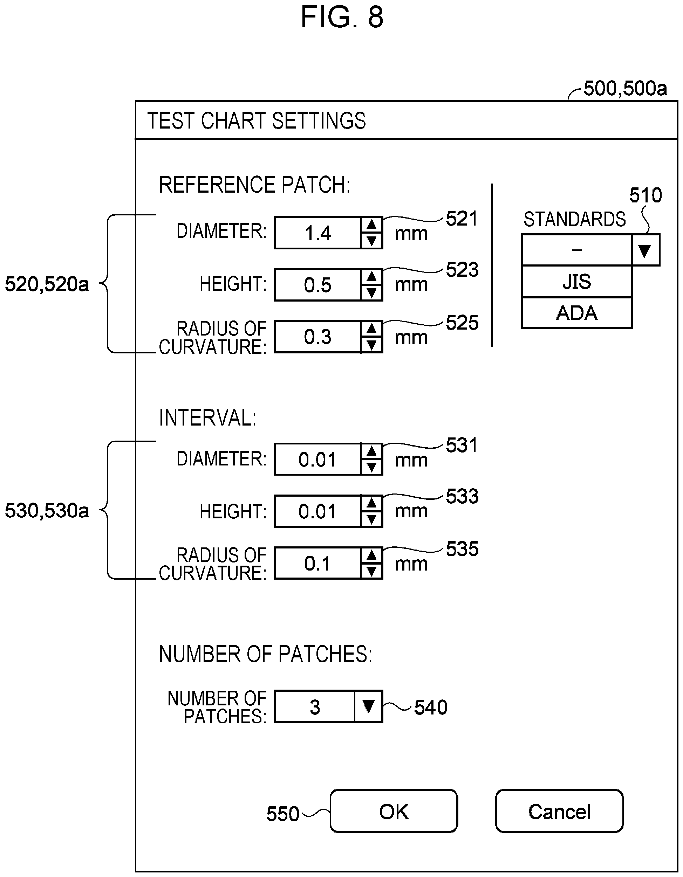

FIG. 8 shows an exemplary braille pattern setting screen 500. FIG. 8 shows a first braille pattern setting screen 500a, which is an example of the braille pattern setting screen 500. The first braille pattern setting screen 500a is displayed on the display 320 under control of the display controller 251. The first braille pattern setting screen 500a receives an operation input by a user with the input device 310.

The first braille pattern setting screen 500a includes a standard setting field 510, a first reference dot setting field 520a, a first interval setting field 530a, a patch number setting field 540, and a decision button icon 550.

The standard setting field 510 receives a standard setting value according to the braille standards for the braille character 400. The standard setting value sets a reference parameter, which is a parameter corresponding to the printed shape of a reference dot 403a. The printed shape is a shape of the dot 403 printed by the printer 100 and is, for example, the diameter D, the height H, the radius of curvature R and so on. The reference parameter corresponds to an example of a first parameter. The reference dot 403a is the dot 403 printed on the print media M based on the reference parameter. The reference dot 403a corresponds to an example of a first dot. The reference dot 403a is formed in a reference braille patch image 411a among a plurality of braille patch images 411 included in the braille test chart 410. The reference braille patch image 411a corresponds to an example of a first braille patch. The standard setting value corresponds to an example of type information of standards related to the reference dot 403a. The standard setting field 510 displays a standard setting value set by a user's input operation. The standard setting field 510 shown in FIG. 8 displays a standard setting value in a pull-down menu. When the user selects a standard setting value included in the pull-down menu, the standard setting field 510 displays the selected standard setting value. The braille standards represented by the standard setting value are the JIS standards, the Americans with Disabilities Act (ADA) standards, or other standards.

The first reference dot setting field 520a, which is an example of the reference dot setting field 520, receives a reference setting value group for setting the reference parameter for the reference dot 403a. The reference setting value group corresponds to the shape of the reference dot 403a. The reference setting value group includes one or more setting values. The reference setting value group corresponds to an example of shape information of the first dot. The first reference dot setting field 520a includes a diameter setting field 521, a height setting field 523, and a curvature radius setting field 525.

The diameter setting field 521 receives a diameter setting value corresponding to the diameter D of the reference dot 403a. The diameter setting value is an exemplary setting value and is included in the reference setting value group. The diameter setting value corresponds to an example of diameter information. The diameter setting field 521 displays a diameter setting value set by a user using the input device 310.

The height setting field 523 receives a height setting value corresponding to the height H of the reference dot 403a. The height setting value is an exemplary setting value and is included in the reference setting value group. The height setting value corresponds to an example of height information. The height setting field 523 displays a height setting value set by a user using the input device 310.

The curvature radius setting field 525 receives a curvature radius setting value corresponding to the radius of curvature R of the reference dot 403a. The curvature radius setting value is an exemplary setting value and is included in the reference setting value group. The curvature radius setting value corresponds to an example of curvature radius information. The curvature radius setting field 525 displays a curvature radius setting value set by a user using the input device 310.

The first braille pattern setting screen 500a shown in FIG. 8 displays the standard setting field 510 and the first reference dot setting field 520a, but the present disclosure is not limited thereto. On the first braille pattern setting screen 500a, either the standard setting field 510 or the first reference dot setting field 520a may be displayed to be settable.

The first interval setting field 530a, which is an example of an interval setting field 530, receives an adjustment value group related to each setting value. The adjustment value group is used when an adjustment parameter, which is a parameter corresponding to the printed shape of an adjustment dot 403b, is generated. The adjustment value group includes one or more adjustment values. The adjustment dots 403b are the dots 403 that form an adjustment braille patch image 411b included in the braille test chart 410. The adjustment dot 403b corresponds to an example of a second dot. The adjustment dot 403b is printed on the print media M based on the adjustment parameter. The adjustment parameter is set using a setting value included in the reference setting value group and an adjustment value included in the adjustment value group. Based on the adjustment parameter, the adjustment braille patch image 411b included in the braille test chart 410 is printed. The adjustment braille patch image 411b corresponds to an example of a second braille patch. The adjustment parameter corresponds to an example of a second parameter. The adjustment value group includes a value representing a difference between the reference parameter and the adjustment parameter. The first interval setting field 530a includes a diameter interval setting field 531, a height interval setting field 533, and a curvature radius interval setting field 535.

The diameter interval setting field 531 receives a diameter adjustment value related to the diameter D that is used when generating the shape of the adjustment dot 403b. The diameter adjustment value is an exemplary adjustment value and is included in the adjustment value group. The diameter interval setting field 531 displays a diameter adjustment value set by a user using the input device 310.

The height interval setting field 533 receives a height adjustment value related to the height H that is used when generating the shape of the adjustment dot 403b. The height adjustment value is an exemplary adjustment value and is included in the adjustment value group. The height interval setting field 533 displays a height adjustment value set by a user using the input device 310.

The curvature radius interval setting field 535 receives a curvature radius adjustment value related to the radius of curvature R that is used when generating the shape of the adjustment dot 403b. The curvature radius adjustment value is an exemplary adjustment value and is included in the adjustment value group. The curvature radius interval setting field 535 displays a curvature radius adjustment value set by a user using the input device 310.

The patch number setting field 540 receives a number setting value, which is the number of images in the braille patch images 411 to be printed according to adjustment of each setting value. The number of images corresponds to an example of the number of braille patch images 411. The braille patch image 411 is used when the user evaluates the readability of the braille character 400. The number setting value is the total number of the braille patch images 411 among which one setting value differs from each other and the other setting values are the same. For example, when the reference setting value group includes three setting values, the diameter setting value, the height setting value, and the curvature radius setting value, the number setting value is the total number of the braille patch images 411 among which the diameter setting value differs and the height setting value and curvature radius setting value are the same. Using the number setting value, the number of images in the braille patch images 411 included in the braille test chart 410 is set. The patch number setting field 540 displays a number setting value set by a user using the input device 310. The number setting value corresponds to an example of number specification information.

The decision button icon 550 receives an operation input by a user. The decision button icon 550 receives an input operation indicating that the input operation on each setting field is complete. The user performs an input operation on each setting field displayed on the first braille pattern setting screen 500a, and then performs an input operation on the decision button icon 550.

The first braille pattern setting screen 500a shown in FIG. 8 includes, but not limited to, the interval setting field 530 and the patch number setting field 540. The first braille pattern setting screen 500a may not include at least one of the interval setting field 530 and the patch number setting field 540. The first braille pattern setting screen 500a desirably includes at least one of the interval setting field 530 and the patch number setting field 540. Inclusion of at least one of the interval setting field 530 and the patch number setting field 540 allows the user to generate the braille test chart 410 in detail.

In response to the user performing an input operation on the decision button icon 550, the input unit 230 receives a setting value or another option input to each setting field. The input unit 230 receives reference dot setting information related to each setting value and braille character interval information.

The reference dot setting information includes at least one of the standard setting value set in the standard setting field 510 and/or a reference setting value group set in the first reference dot setting field 520a. The reference setting value group includes at least one or more of the diameter setting value, the height setting value, and/or the curvature radius setting value. The reference dot setting information corresponds to an example of setting information.

The braille character interval information is an adjustment value group set in the first interval setting field 530a. The adjustment value group includes at least one of the diameter adjustment value, the height adjustment value, and the curvature radius adjustment value. The braille character interval information corresponds to a difference between the reference parameter and the adjustment parameter. When the first braille pattern setting screen 500a does not include the interval setting field 530, the input unit 230 obtains predetermined braille character interval information from the storage unit 220. The storage unit 220 stores the braille character interval information predetermined in advance. The braille character interval information corresponds to an example of interval information.

When the first braille pattern setting screen 500a includes the patch number setting field 540, the input unit 230 receives a number setting value. When the first braille pattern setting screen 500a does not include the patch number setting field 540, the input unit 230 obtains a predetermined number setting value from the storage unit 220. The storage unit 220 stores the number setting value predetermined in advance.

The printing control apparatus 200 includes the input unit 230 that receives the reference dot setting information for setting the reference parameter. The reference dot setting information includes at least one of the reference setting value group and/or the standard setting value.

The user may set the shape of the reference dot 403a of the reference braille patch image 411a included in the braille test chart 410. The user may set the braille character 400 having any size or according to any of various standards as the reference braille patch image 411a.

The input unit 230 desirably receives a number setting value specifying the number of images in the plurality of braille patch images 411 included in the braille test chart 410.

The user may adjust the number of braille patch images 411 included in the braille test chart 410.

After receiving the reference dot setting information, the braille character interval information, and the number setting value, the input unit 230 transmits the reference dot setting information, the braille character interval information, and the number setting value to the data generator 253.

The data generator 253 receives the reference dot setting information and the braille character interval information as setting data. The data generator 253 generates the braille test chart print data using the reference dot setting information, the braille character interval information, and the number setting value. The braille test chart print data includes the reference parameter and the adjustment parameter. The data generator 253 generates the reference parameter and the adjustment parameter.

The data generator 253 generates the reference parameter using the reference dot setting information. The data generator 253 determines whether the reference dot setting information is at least one of the standard setting value and the reference setting value group.

If it is determined that the reference dot setting information is the standard setting value, the data generator 253 reads a standard value data group corresponding to the standard setting value from the storage unit 220. The standard value data includes a diameter standard value, a height standard value, and a curvature radius standard value. The standard value data group is stored in the storage unit 220 in advance. The data generator 253 generates a reference parameter including the standard value data. The data generator 253 generates a reference parameter in which the diameter standard value, the height standard value, and the curvature radius standard value are a diameter setting value, the height setting value, and the curvature radius setting value, respectively.

If it is determined that the reference dot setting information is the reference setting value group, the data generator 253 generates a reference parameter using the reference setting value group. The data generator 253 generates a reference parameter including the diameter setting value, the height setting value, and the curvature radius setting value.

The data generator 253 may convert the height setting value to an ink layer number setting value. The ink layer number setting value corresponds to the number of layers of the ink layers 407 shown in FIG. 6. The data generator 253 generates a reference parameter including the ink layer number setting value instead of the height setting value. The ink layer number setting value represents the number of layers of the ink layers 407 corresponding to the height setting value. The ink layer number setting value corresponds to an example of a first layer number setting value.

If it is determined that the reference dot setting information is the standard setting value and the reference setting value group, the data generator 253 reads the standard value data group corresponding to the standard setting value from the storage unit 220. The data generator 253 compares the reference setting value group with the standard value data group. The data generator 253 replaces a setting value different from the setting value included in the reference setting value group, among the plurality of setting values included in the standard value data group, with the setting value included in the reference setting value group. The data generator 253 generates a modified reference setting value group. The data generator 253 generates a reference parameter including the modified reference setting value group.

After generating the reference parameter, the data generator 253 generates a plurality of adjustment parameters using the reference parameter, the interval information, and the number setting value.

The data generator 253 determines the number of images in the braille patch images 411 for each setting value from the number setting value. The braille test chart 410 consists of one reference braille patch image 411a and a plurality of adjustment braille patch images 411b. The data generator 253 determines the number of images in the adjustment braille patch images 411b using the number setting value. When the number setting value is three and the three setting values are the diameter setting value, the height setting value, and the curvature radius setting value, the braille test chart 410 consists of 27 braille patch images 411. The braille test chart 410 consists of one reference braille patch image 411a and 26 adjustment braille patch images 411b.

The data generator 253 generates an adjustment parameter corresponding to each of the plurality of adjustment braille patch images 411b. The data generator 253 generates the adjustment parameter using the reference parameter and the interval information. When the reference parameter includes the diameter setting value, the height setting value, and the curvature radius setting value, the data generator 253 generates the adjustment parameter using one of the diameter adjustment value, the height adjustment value, and the curvature radius adjustment value. The adjustment parameter includes an adjustment diameter setting value, an adjustment height setting value, and an adjustment curvature radius setting value. The data generator 253 causes at least one of the adjustment diameter setting value, the adjustment height setting value, and the adjustment curvature radius setting value included in the adjustment parameter to differ from a corresponding one of the diameter setting value, the height setting value, and the curvature radius setting value included in the reference parameter. The data generator 253 causes the reference parameter to differ from the adjustment parameter.

By way of example, the data generator 253 causes the adjustment diameter setting value included in the adjustment parameter to differ from the diameter setting value included in the reference parameter. The data generator 253 generates the adjustment diameter setting value included in the adjustment parameter by adding or subtracting the diameter adjustment value to or from the diameter setting value included in the reference parameter. The data generator 253 generates the adjustment diameter setting value included in the adjustment parameter by adding or subtracting a multiple of the diameter adjustment value to or from the diameter setting value included in the reference parameter. The data generator 253 generates the adjustment height setting value and the adjustment curvature radius setting value included in the adjustment parameter in a similar method.

When the reference parameter includes the ink layer number setting value instead of the height setting value, the data generator 253 generates an adjustment parameter including an adjustment ink layer number setting value. The data generator 253 converts the height adjustment value to an ink layer number adjustment value. The ink layer number adjustment value is the number of layers of the ink layers 407 corresponding to the height adjustment value. The data generator 253 uses the ink layer number setting value and the ink layer number adjustment value to generate the adjustment ink layer number setting value. When the height adjustment value is set, the adjustment ink layer number setting value differs from the ink layer number setting value. The adjustment ink layer number setting value corresponds to an example of a second layer number setting value.

The data generator 253 generates braille test chart print data including the reference parameter and a plurality of adjustment parameters and then transmits the braille test chart print data to the printer 100 via the communication controller 255. The printer 100 receives braille test chart print data. The printer 100 prints the braille test chart 410 based on the braille test chart print data.

After causing the printer 100 to print the braille test chart 410, the printing control apparatus 200 receives a result of the user's evaluation of the braille patch images 411. The user performs a specification input operation, which specifies a desired one of the braille patch images 411, on the input device 310. The input unit 230 inputs specification data corresponding to the specification input operation. The specification data includes patch specification information indicating the desired one of the braille patch images 411. The input unit 230 transmits the specification data to the data generator 253. The data generator 253 uses the patch specification information to identify the braille patch image 411. The data generator 253 causes a braille character parameter for printing the identified braille patch image 411 to be stored in the storage unit 220. The braille character parameter is one of the reference parameter and the plurality of adjustment parameters. In response to obtaining a print instruction for printing the braille character 400, the printing control apparatus 200 generates print data including the braille character parameter. The printing control apparatus 200 causes the printer 100 to perform printing based on the print data including the braille character parameter.

The printing control apparatus 200 includes the data generator 253 that generates braille test chart print data for causing the printer 100, which ejects ink, to print the braille test chart 410 consisting of a plurality of braille patch images 411 each including the reference braille patch image 411a and the adjustment braille patch images 411b, and the communication controller 255 that transmits the braille test chart print data to the printer 100. The data generator 253 causes the reference parameter related to the reference dot 403a included in the reference braille patch image 411a to differ from the adjustment parameter related to the adjustment dot 403b included in the adjustment braille patch image 411b.

When braille characters are printed by the printer 100, a printing result varies depending on, for example, the type of recording paper. The printing control apparatus 200 may cause the printer 100 to print the braille test chart 410 including the braille characters 400 that differ in printing conditions. The user may determine printing conditions for printing the desired braille characters 400 by evaluating the braille test chart 410.

The input unit 230 receives the braille character interval information indicating a difference between a reference parameter and an adjustment parameter. The data generator 253 desirably generates the adjustment parameter based on the reference dot setting information and the braille character interval information.

The user may adjust shape differences among a plurality of braille patch images 411 in the braille test chart 410 to desired differences.

When the input unit 230 receives reference dot setting information including the height setting value, the data generator 253 desirably generates a reference parameter including an adjustment ink layer number setting value, which is the number of the ink layers 407 corresponding to the height setting value, and generates an adjustment parameter including an adjustment ink layer number setting value different from the ink layer number setting value.

The printing control apparatus 200 may convert the shape of the dot 403 to data that is likely to correspond to the printing conditions imposed by the printer 100.

The print control program PG causes the printing control apparatus 200 to execute the data generator 253, which generates braille test chart print data for causing the printer 100 to print the braille test chart 410 consisting of a plurality of braille patch images 411 each including the reference braille patch image 411a and the adjustment braille patch images 411b, and the communication controller 255, which transmits the braille test chart print data to the printer 100. The data generator 253 causes the reference parameter related to the reference dot 403a included in the reference braille patch image 411a to differ from the adjustment parameter related to the adjustment dot 403b included in the adjustment braille patch image 411b.

The print control program PG may cause the printer 100 to print the braille test chart 410 including the braille characters 400 with different printing conditions. The user may determine printing conditions for printing the desired braille characters 400 by evaluating the braille test chart 410.

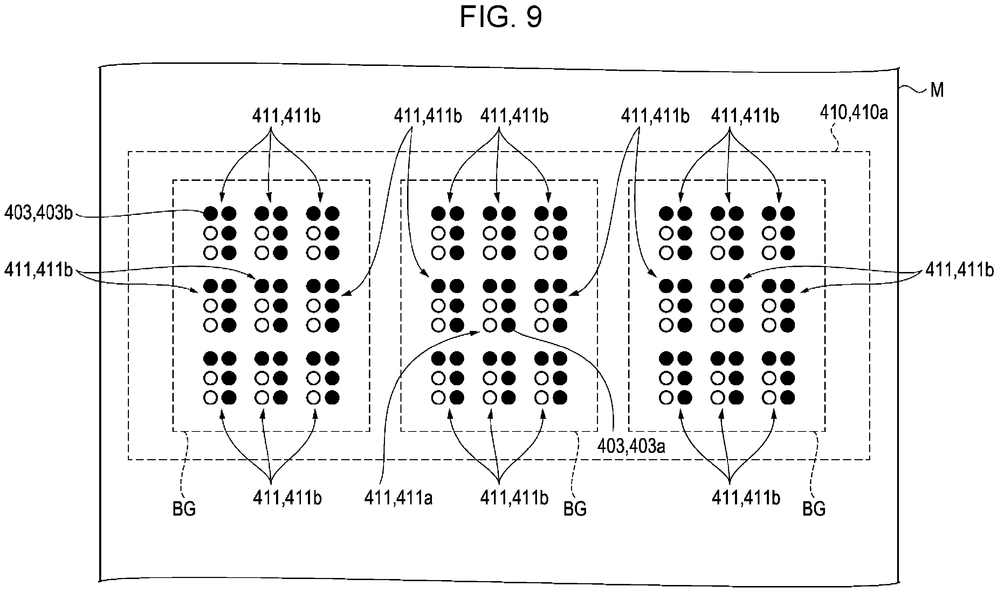

FIG. 9 shows an example of the braille test chart 410. FIG. 9 shows a first braille test chart 410a as an example of the braille test chart 410. FIG. 9 shows the first braille test chart 410a that is printed based on the braille test chart print data by the printer 100. The first braille test chart 410a is printed on the print media M. FIG. 9 shows the first braille test chart 410a when the number setting value is three.

The first braille test chart 410a shown in FIG. 9 consists of 27 braille patch images 411. The first braille test chart 410a consists of one reference braille patch image 411a and 26 adjustment braille patch images 411b. The reference braille patch image 411a is formed of a plurality of reference dots 403a. The reference dot 403a is printed based on the reference parameter. The adjustment braille patch images 411b is formed of a plurality of adjustment dots 403b. The adjustment dot 403b is printed based on the adjustment parameter. The respective adjustment dots 403b forming the plurality of adjustment braille patch images 411b are printed based on the adjustment parameters different from each other. The reference dot shape of the reference dot 403a included in the reference braille patch image 411a differs from the adjustment dot shape of the adjustment dot 403b included in the adjustment braille patch image 411b. The adjustment dot shapes of the respective adjustment dots 403b forming the plurality of adjustment braille patch images 411b differ from each other. The reference dot shape corresponds to an example of a first shape. The adjustment dot shape corresponds to an example of a second shape. The plurality of braille patch images 411 included in the first braille test chart 410a are printed using parameters different from each other. The plurality of braille patch images 411 included in the first braille test chart 410a are printed in shapes different from each other.

In the first braille test chart 410a, the braille patch images 411 are arranged in nine columns and three rows. The reference braille patch image 411a included in the first braille test chart 410a shown in FIG. 9 is arranged at the center position of the plurality of braille patch images 411. The arrangement of the braille patch images 411 is not limited to the arrangement shown in FIG. 9. The arrangement of the braille patch images 411 may be set as appropriate.

The plurality of braille patch images 411 included in the first braille test chart 410a are arranged to be divided into three braille image groups BG. Each of the plurality of braille image groups BG includes braille patch images 411 that are printed using the three setting values one of which has the same value. The plurality of braille patch images 411 included in the first braille test chart 410a are arranged to be divided into three braille image groups BG, but are not limited to this. The plurality of braille patch images 411 may not be divided into a plurality of braille image groups BG.

The first braille test chart 410a includes the reference braille patch image 411a and the adjustment braille patch images 411b. The reference dot shape of the reference dot 403a included in the reference braille patch image 411a differs from the adjustment dot shape of the adjustment dot 403b included in the adjustment braille patch image 411b.

When checking the first braille test chart 410a with a finger, the user easily distinguish the reference braille patch image 411a from the adjustment braille patch image 411b.

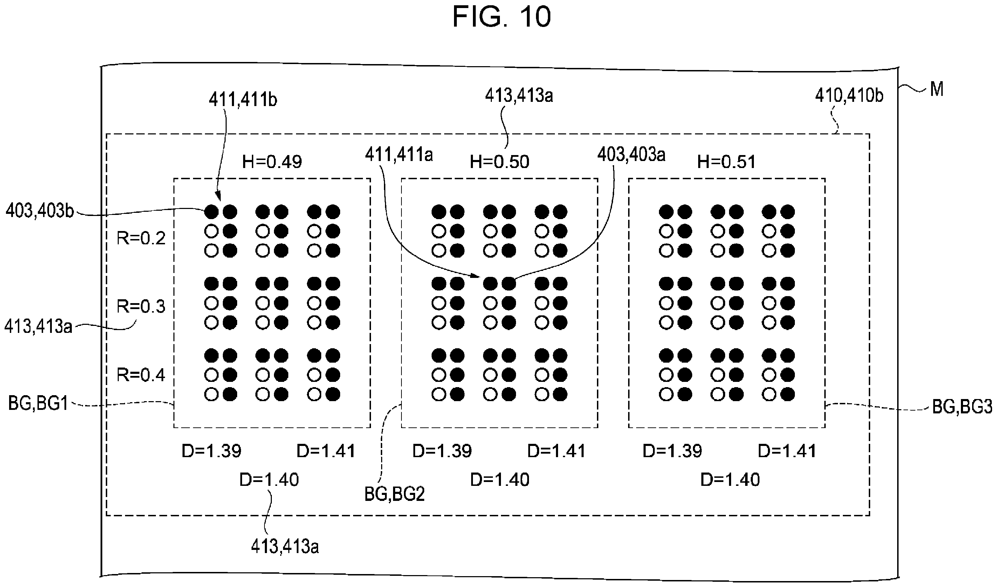

FIG. 10 shows an example of the braille test chart 410. FIG. 10 shows a second braille test chart 410b as an example of the braille test chart 410. FIG. 10 shows the second braille test chart 410b that is printed based on the braille test chart print data by the printer 100. The second braille test chart 410b is printed on the print media M. FIG. 10 shows the second braille test chart 410b when the number setting value is three.

The second braille test chart 410b displays first identification images 413a. Other than displaying the first identification images 413a, the second braille test chart 410b has the same configuration as the first braille test chart 410a.

An identification image 413 is an image identifying the braille patch image 411. The identification image 413 distinguishes the reference braille patch image 411a from the adjustment braille patch images 411b. The identification image 413 distinguishes the plurality of adjustment braille patch images 411b from each other. The first identification image 413a is an example of the identification image 413. The user may perform the specification input operation mentioned above, which specifies the braille patch image 411, using information indicated by the identification image 413.

The first identification images 413a indicate setting values for the dots 403 that form the braille patch image 411. The first identification images 413a indicate a setting value for the diameter D, a setting value for the height H, and a setting value for the radius of curvature R. The setting value for the diameter D, the setting value for the height H, and the setting value for the radius of curvature R are the diameter setting value, the height setting value, and the curvature radius setting value, respectively. The diameter setting value, the height setting value, and the curvature radius setting value are included in the reference parameter or the adjustment parameter. The user may recognize the shapes of the dots 403, which form each braille patch image 411, by checking the first identification images 413a.

In the second braille test chart 410b, the braille patch images 411 are divided into a first braille image group BG1, a second braille image group BG2, and a third braille image group BG3. The first braille image group BG1, the second braille image group BG2, and the third braille image group BG3 are examples of the braille image group BG. The first braille image group BG1 includes the braille patch images 411 in which the height setting value for the dot 403 is 0.49. The second braille image group BG2 includes the braille patch images 411 in which the height setting value for the dot 403 is 0.50. The third braille image group BG3 includes the braille patch images 411 in which the height setting value for the dot 403 is 0.51.

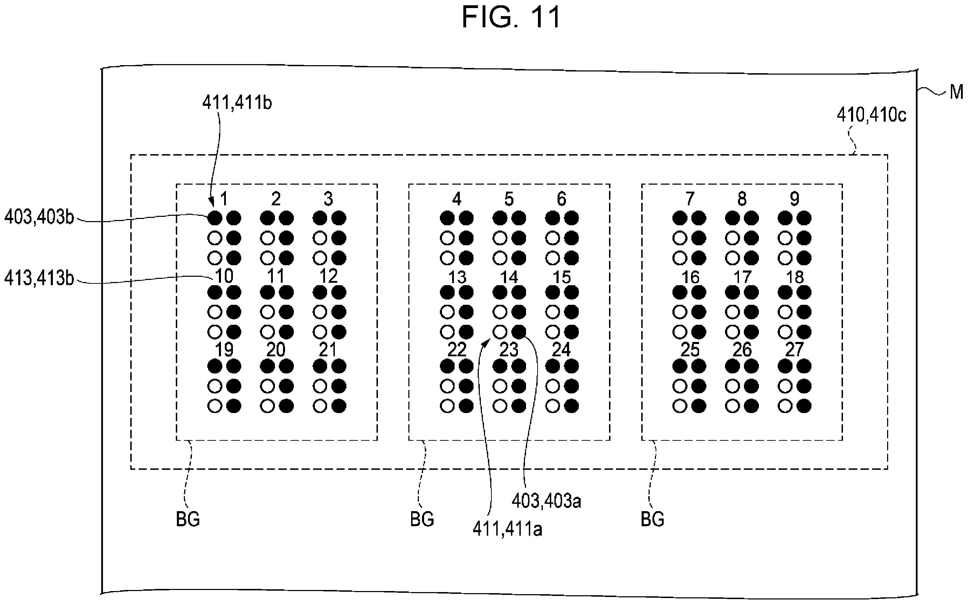

FIG. 11 shows an example of the braille test chart 410. FIG. 11 shows a third braille test chart 410c as an example of the braille test chart 410. FIG. 11 shows the third braille test chart 410c that is printed based on the braille test chart print data by the printer 100. The third braille test chart 410c is printed on the print media M. FIG. 11 shows the third braille test chart 410c when the number setting value is three.

The third braille test chart 410c displays second identification images 413b. Other than displaying the second identification images 413b, the third braille test chart 410c has the same configuration as the first braille test chart 410a.

The second identification image 413b is an example of the identification image 413. The second identification image 413b is a numerical value corresponding to the braille patch image 411. Numerical value 1, numerical value 2, and other numerical values of the second identification images 413b indicate adjustment braille patch images 411b. Numerical value 14 of the second identification image 413b indicates the reference braille patch image 411a. The user may identify any braille patch image 411 among a plurality of braille patch images 411 by checking the second identification image 413b.

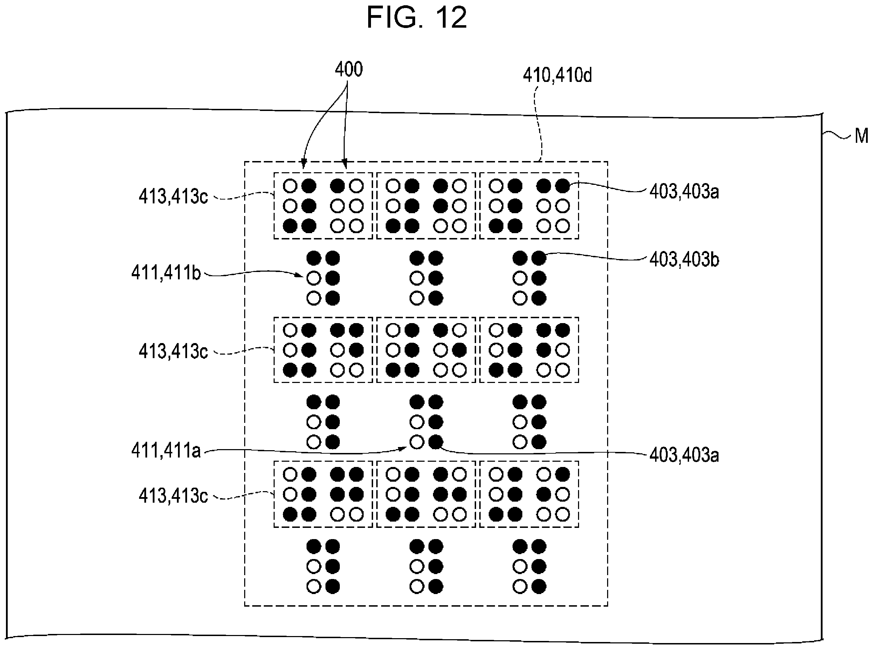

FIG. 12 shows an example of the braille test chart 410. FIG. 12 shows a fourth braille test chart 410d as an example of the braille test chart 410. FIG. 12 shows the fourth braille test chart 410d that is printed based on the braille test chart print data by the printer 100. The fourth braille test chart 410d is printed on the print media M. FIG. 12 shows the fourth braille test chart 410d when the number setting value is two.

The fourth braille test chart 410d displays third identification images 413c and the braille patch images 411. The braille patch images 411 include a reference braille patch image 411a and adjustment braille patch images 411b. The fourth braille test chart 410d includes one reference braille patch image 411a and eight adjustment braille patch images 411b. The reference dot shape of the reference dot 403a included in the reference braille patch image 411a differs from the adjustment dot shape of the adjustment dot 403b included in the adjustment braille patch image 411b. The adjustment dot shapes of the respective adjustment dots 403b forming the plurality of adjustment braille patch images 411b differ from each other.

The third identification image 413c is an example of the identification image 413. The third identification image 413c is printed based on identification image data. The identification image data corresponds to an example of the identification image data. The identification image data is generated by the data generator 253. The identification image data is added to the braille test chart print data. With the identification image data, the printer 100 prints characters, numerical values, and so on, which identify the braille patch image 411, in the braille characters 400.

The third identification image 413c displays the braille characters 400 corresponding to the braille patch image 411. The third identification image 413c shown in FIG. 12 consists of two braille characters 400. The braille character 400 of the third identification image 413c includes, by way of example, the reference dot 403a. The braille characters 400 of the third identification image 413c indicate numerical values. The user may identify the third identification image 413c when evaluating the braille patch image 411 with a finger. The user may identify any braille patch image 411 among the plurality of braille patch images 411 by checking the third identification image 413c.

The third identification image 413c shown in FIG. 12 consists of two braille characters 400, but is not limited to this. The third identification image 413c may consist of one or three or more braille characters 400. The braille characters 400 of the third identification image 413c may indicate characters, for example.

The fourth braille test chart 410d includes the third identification images 413c that distinguish the reference braille patch image 411a from the adjustment braille patch images 411b. The data generator 253 generates identification image data for printing the third identification images 413c in the braille characters 400 and adds the identification image data to the braille test chart print data.

The user may check the identification image 413 corresponding to the braille patch image 411 with a finger. The user is likely to identify a desired braille patch image 411.

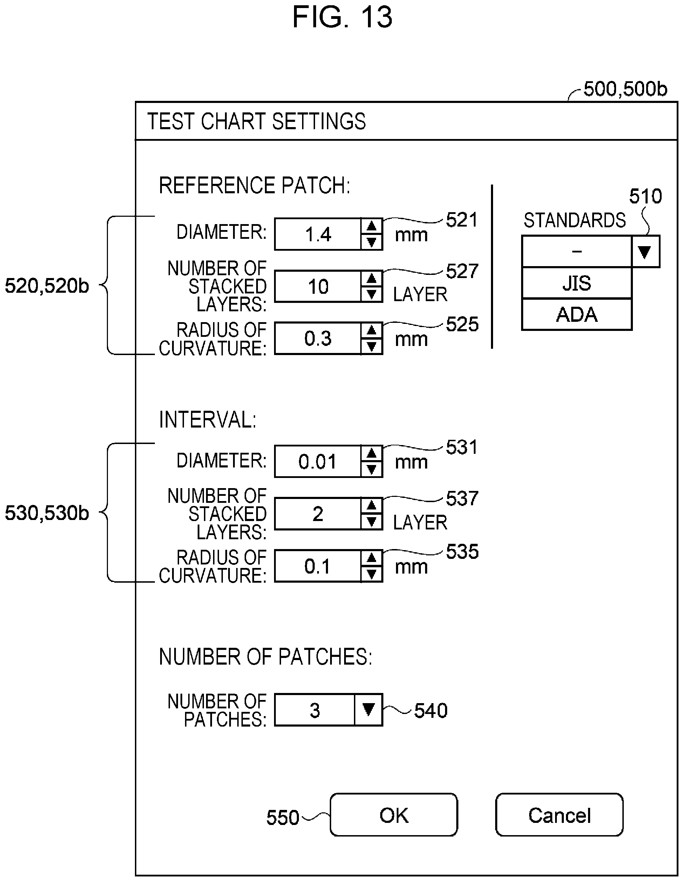

FIG. 13 shows an exemplary braille pattern setting screen 500. FIG. 13 shows a second braille pattern setting screen 500b, which is an example of the braille pattern setting screen 500. The second braille pattern setting screen 500b is displayed on the display 320 under control of the display controller 251. The second braille pattern setting screen 500b receives an operation input by a user with the input device 310.

The second braille pattern setting screen 500b includes the standard setting field 510, a second reference dot setting field 520b, a second interval setting field 530b, the patch number setting field 540, and the decision button icon 550. The standard setting field 510, the patch number setting field 540, and the decision button icon 550 in the second braille pattern setting screen 500b have the same configurations as the standard setting field 510, the patch number setting field 540, and the decision button icon 550 in the first braille pattern setting screen 500a.

The second reference dot setting field 520b, which is an example of the reference dot setting field 520, receives a reference setting value group for setting the reference parameter for the reference dot 403a. The reference setting value group corresponds to the shape of the reference dot 403a. The reference setting value group includes one or more setting values. The second reference dot setting field 520b includes the diameter setting field 521, a stacked layer number setting field 527, and the curvature radius setting field 525. The diameter setting field 521 and the curvature radius setting field 525 included in the second reference dot setting field 520b have the same configurations as the diameter setting field 521 and the curvature radius setting field 525 included in the first reference dot setting field 520a.

The stacked layer number setting field 527 receives a stacked layer number setting value. The stacked layer number setting value is a setting value for the number of stacked ink layers 407 that are stacked when the printer 100 prints the reference dot 403a by ejecting ink. The stacked layer number setting value is an exemplary setting value and is included in the reference setting value group. The stacked layer number setting value corresponds to an example of layer number information. The stacked layer number setting field 527 displays a stacked layer number setting value set by a user using the input device 310.

The second interval setting field 530b, which is an example of the interval setting field 530, receives an adjustment value group related to each setting value. The adjustment value group is used when an adjustment parameter related to adjustment dot 403b is generated. The adjustment value group includes one or more adjustment values. The second interval setting field 530b includes the diameter interval setting field 531, a stacked layer number interval setting field 537, and the curvature radius interval setting field 535. The diameter interval setting field 531 and the curvature radius interval setting field 535 included in the second interval setting field 530b have the same configurations as the diameter interval setting field 531 and the curvature radius interval setting field 535 included in the first interval setting field 530a.

The stacked layer number interval setting field 537 receives a stacked layer number adjustment value. The stacked layer number adjustment value is related to the number of stacked ink layers 407 when the shape of the adjustment dot 403b is formed. The stacked layer number adjustment value is an exemplary adjustment value and is included in the adjustment value group. The stacked layer number interval setting field 537 displays a stacked layer number adjustment value set by a user using the input device 310.

After receiving the reference dot setting information, the braille character interval information, and the number setting value, the input unit 230 transmits the reference dot setting information, the braille character interval information, and the number setting value to the data generator 253. The reference dot setting information includes a stacked layer number setting value. The braille character interval information includes a stacked layer number adjustment value.

The data generator 253 receives the reference dot setting information including a stacked layer number setting value and the braille character interval information including a stacked layer number adjustment value as setting data. The data generator 253 generates the braille test chart print data using the reference dot setting information, the braille character interval information, and the number setting value. The braille test chart print data includes a reference parameter and an adjustment parameter. The data generator 253 generates the reference parameter and the adjustment parameter.

The reference setting value group desirably includes at least one or more of the diameter setting value, the height setting value, the curvature radius setting value, and/or the stacked layer number setting value.

The user may set the shapes of the dots 403 included in the braille patch image 411 in detail.

## Claims

1. An information processing apparatus comprising:
a generator configured to generate test chart image data for causing a printing apparatus ejecting ink to print a test chart image including a plurality of braille patches, the plurality of braille patches including a first braille patch and a second braille patch; and
a transmitter configured to transmit the test chart image data to the printing apparatus,
wherein the generator is configured to cause a first parameter related to a first dot included in the first braille patch to differ from a second parameter related to a second dot included in the second braille patch.

2. The information processing apparatus according to claim 1, further comprising:
a receiving section configured to receive setting information for setting the first parameter,
wherein the setting information includes at least one of shape information of the first dot or type information of a standard related to the first dot.

3. The information processing apparatus according to claim 2, wherein
the receiving section is configured to receive interval information indicating a difference between the first parameter and the second parameter, and
the generator is configured to generate the second parameter based on the setting information and the interval information.

4. The information processing apparatus according to claim 2, wherein the receiving section is configured to receive number specification information specifying a number of the plurality of braille patches included in the test chart image.

5. The information processing apparatus according to claim 2, wherein the shape information includes at least one or more of diameter information, height information, curvature radius information, or layer number information indicative of a number of ink layers forming the first dot.

6. The information processing apparatus according to claim 5, wherein, in response to the receiving section receiving the shape information including the height information, the generator is configured to generate the first parameter including a first layer number setting value, the first layer number setting value being a number of ink layers corresponding to the height information, and to generate the second parameter including a second layer setting value different from the first layer number setting value.

7. The information processing apparatus according to claim 1, wherein
the test chart image includes identification information distinguishing the first braille patch from the second braille patch, and
the generator is configured to generate identification information data for causing the identification information to be printed in a braille character and to add the identification information data to the test chart image data.

8. A non-transitory computer-readable storage medium storing an information processing program that, when executed, causes a computer to execute:
a generator configured to generate test chart image data for causing a printing apparatus to print a test chart image including a plurality of braille patches including a first braille patch and a second braille patch; and
a transmitter configured to transmit the test chart image data to the printing apparatus,
wherein the generator is configured to cause a first parameter related to a first dot included in the first braille patch to differ from a second parameter related to a second dot included in the second braille patch.

9. A test chart comprising:
a first braille patch; and
a second braille patch,
wherein a first shape of a first dot included in the first braille patch differs from a second shape of a second dot included in the second braille patch.
